# EUROPEAN PATENT SPECIFICATION

(11) **EP 3 183 097 B1**
(45) Date of publication and mention of the grant of the patent: **01.01.2020**
(21) Application number: 15742508.3
(22) Date of filing: 15.07.2015
(51) Int. Cl.: B25F 1/00, B25F 1/04

(54) **MULTIFUNCTIONAL WELDING APPARATUS**
MULTIFUNKTIONALE SCHWEISSVORRICHTUNG
APPAREIL DE SOUDAGE MULTIFONCTIONNEL

(30) Priority: 22.08.2014 US 201414466253
(43) Date of publication of application: 28.06.2017
(73) Proprietor: Hobart Brothers Company, Troy, Ohio 45373 (US)
(72) Inventor: ROZMARYNOWSKI, Scott R., Glenview, Illinois 60025 (US); WILE, Gary, Glenview, Illinois 60025 (US); GAO, Zhong, Glenview, Illinois 60025 (US)
(74) Representative: Trinks, Ole
(86) International application number: PCT/US2015/040665
(87) International publication number: WO 2016/028418

(56) References cited:
- EP-A2- 2 614 930
- DE-U1- 29 910 934
- US-A- 4 238 862
- US-A- 5 781 950
- US-A1- 2002 083 530
- US-A1- 2005 177 954

## Description

### FIELD OF THE INVENTION

The present disclosure generally relates to tools and, more particularly, to welding tools. Some examples are known from US4238862A1, US2002083530A1 or US5781950A1.

### BACKGROUND

Many tasks are associated with a welding process. Typically, welders are required to carry a variety of tools to perform the many welding tasks. Carrying and keeping track of a variety of tools can be cumbersome and oftentimes welding tools are lost or otherwise misplaced. Furthermore, purchasing a variety of tools can be an expensive endeavor, especially when replacement of the tools is required due to the tool being lost.

Multifunctional tools exist in the market place. However, such multifunctional tools do not include the necessary tools to perform welding tasks. If a welder uses a conventional multifunctional tool, the welder is still required to purchase a variety of other tools capable of performing welding tasks

### SUMMARY

Thus, a need exists for a welding apparatus that resolves one or more of the above-referenced issues or other issues that exist with welding processes.

The present disclosure is defined by the following claims, by device claim 1 and method claim 7.

In claim 1, a multifunctional welding apparatus is provided.

In claim 7, a method of operating a multifunctional welding apparatus is provided.

According to claim 1, a multifunctional welding apparatus is provided and includes a first handle, a first head member moveably coupled to the first handle, a second handle, a second head member movably coupled to the second handle, wherein the first head member and the second head member are rotatably coupled to each other, and a first tool unitarily formed with one of the first head member and the second head member. The first tool comprises a pliers, a nozzle removing tool, a tip removing tool, a wire cutting tool, a hammer and a cleaning tool. The apparatus also includes a plurality of tools moveably coupled to at least one of the first handle and the second handle. The plurality of tools includes at least one of a thickness gauge, a scratching tool, and a picking tool.

In one aspect, a multifunctional welding apparatus is provided and includes a first handle, a second handle moveably coupled to the first handle, and a plurality of tools coupled to at least one of the first handle and the second handle. Each of the plurality of tools is configured to perform a different function. The plurality of tools include a pliers, a nozzle removing tool, a tip removing tool, a wire cutting tool, a hammer, a nozzle cleaning tool, and at least one of a thickness gauge, a scratching tool, a picking tool, a file, a flathead-type screwdriver, a phillips-type screwdriver, and a knife.

According to claim 7, a method of operating a multifunctional welding apparatus is provided. The method includes moving a first handle of the multifunctional welding apparatus relative to a second handle of the multifunctional welding apparatus, removing a first head member from a first cavity of the first handle upon moving the first handle relative to the second handle, removing a second head member from a first cavity of the second handle upon moving the first handle relative to the second handle, providing at least one tool unitarily formed with at least one of the first and second head members, and providing a plurality of tools coupled to at least one of the first and second handles. The plurality of tools includes at least one of a thickness gauge, a scratching tool, a picking tool, a nozzle removing tool, and a tip removing tool. The method also includes moving at least one of the plurality of tools relative to the at least one of the first and second handles.

### BRIEF DESCRIPTION OF THE DRAWINGS

The disclosure can be better understood with reference to the following drawings and description. The components in the figures are not necessarily to scale, emphasis instead being placed upon illustrating the principles of the disclosure.
Fig. 1 is a perspective view of one example of a multifunctional welding apparatus shown in a closed or inoperative condition, according to one aspect of the present disclosure.
Fig. 2 is a perspective view of the multifunctional welding apparatus illustrated in Fig. 1 shown in an opened or operative condition, according to one aspect of the present disclosure.
Fig. 3 is an enlarged view of a portion of the multifunctional welding apparatus shown in Figs. 1 and 2, according to one aspect of the present disclosure.
Fig. 4 is an enlarged view of a portion of the multifunctional welding apparatus shown in Figs. 1 and 2, according to one aspect of the present disclosure.
Fig. 5 is an enlarged view of a portion of the multifunctional welding apparatus shown in Figs. 1 and 2, according to one aspect of the present disclosure.
Fig. 6 is an enlarged view of one example of a thickness gauge of the multifunctional welding apparatus shown in Figs. 1 and 2, according to one aspect of the present disclosure.
Fig. 7 is an exploded view of one example of a wire cutter of the multifunctional welding apparatus shown in Figs. 1 and 2, according to one aspect of the present disclosure.

### DETAILED DESCRIPTION

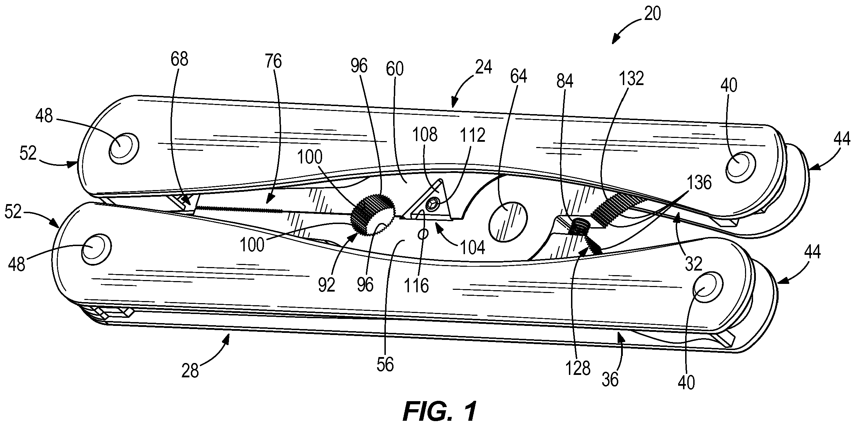

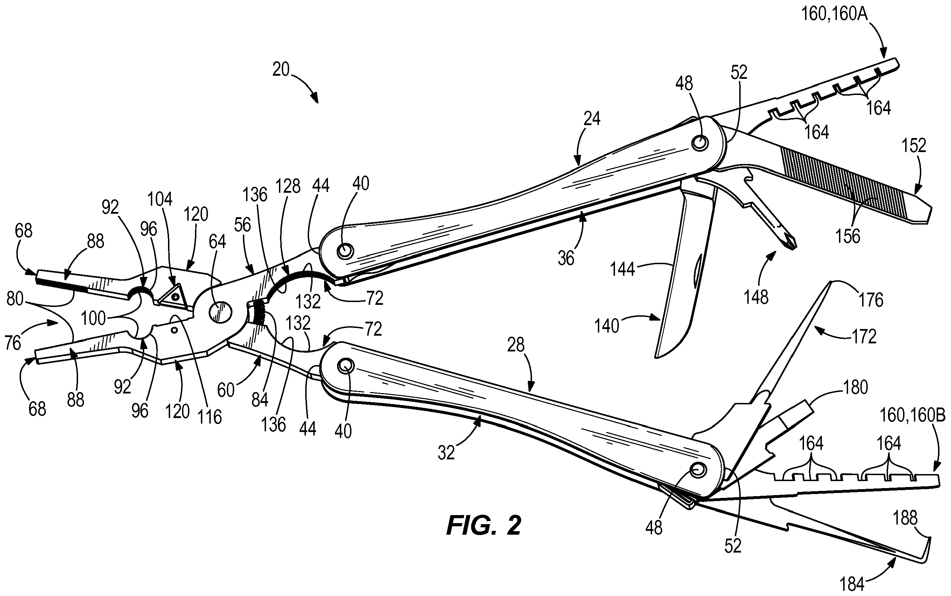

With reference to Figs. 1 and 2, one example of a multifunctional welding apparatus 20 is illustrated. The apparatus 20 is moveable between a closed or inoperative condition (see Fig. 1) and an opened or operative condition (see Fig. 2). The apparatus 20 includes a first handle 24 and a second handle 28 with each of the first and second handles 24, 28 including a first cavity 32 and a second cavity 36. Each handle 24, 28 also includes a first pivot 40 near a first end 44 of the handles 24, 28 and a second pivot 48 near a second end 52 of the handles 24, 28. The first pivots 40 of the first and second handles 24, 28 allow the first and second handles 24, 28 to rotate between the closed condition and the opened position. In other examples, the first and second handles 24, 28 may move between closed and opened conditions in a variety of other manners including, but not limited to, sliding, twisting, translating, or any other type of unidirectional, bi-directional, or tri-directional movement (e.g., along one axis, or two or three axes).

With continued reference to Figs. 1 and 2, the apparatus 20 includes a plurality of tools for performing a plurality of welding tasks or functions. Each tool performs a different function associated with welding. In the illustrated example, the plurality of tools are rotatable relative to a respective one of the first and second handles 24, 28 about the second pivots 48 on the first and second handles 24, 28. In other examples, the plurality of tools may be movable in a variety of other manners including, but not limited to, sliding, translating, twisting, or other type of unidirectional, bi-directional, or tri-directional movement (e.g., along one axis, or two or three axes).

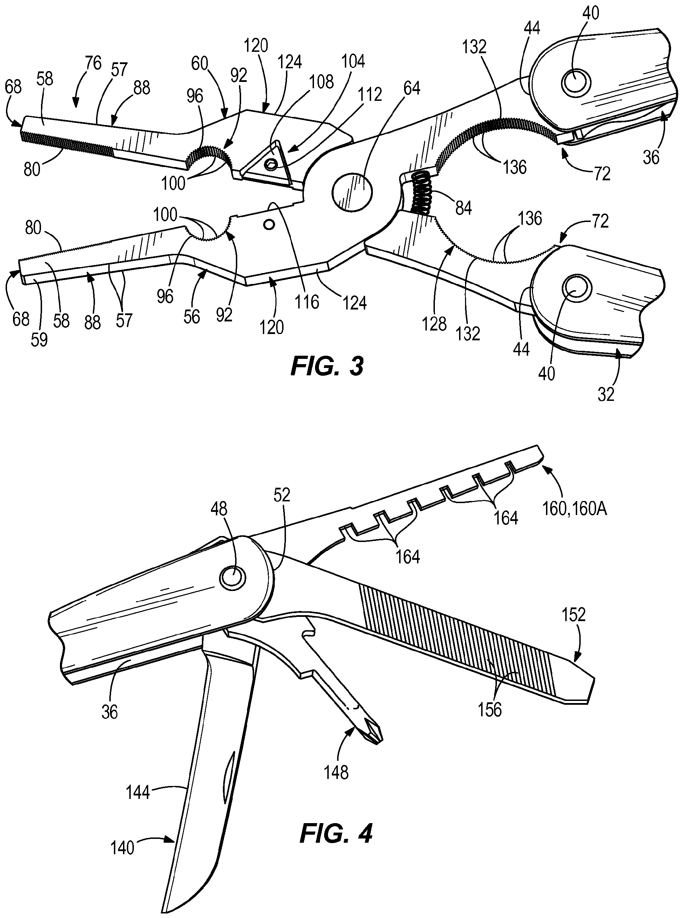

Referring now to Figs. 1-3, the apparatus 20 includes a first head member 56 rotatably coupled to the first handle 24 at the first pivot 40 associated with the first handle 24 and a second head member 60 rotatably coupled to the second handle 28 at the first pivot 40 associated with the second handle 28. The first and second head members 56, 60 are rotatably coupled to each other at a head pivot 64 oriented between first and second ends 68, 72 of the first and second head members 56, 60 and displaced from the first and second handles 24, 28.

With continued reference to Figs. 1-3, the apparatus 20 includes a pliers 76 for performing a pliers function. In one example, first ends 68 of the first and second head members 56, 60 move relative to each other to provide the pliers 76 and perform the plier function. The first ends 68 of the first and second head members 56, 60 include a plurality of teeth or projections 80 on abutting surfaces to provide friction to a workpiece, thereby inhibiting movement of the workpiece relative to the apparatus 20 when performing the plier function. The apparatus 20 also includes a biasing member 84 between the first and second head members 56, 60 to assist with moving the first and second head members 56, 60 apart from one another. A user may overcome the force of the biasing member 84 by squeezing the first and second handles 24, 28 together.

With additional reference to Figs. 1-3, the apparatus 20 also includes a nozzle cleaning tool 88 for performing a nozzle cleaning function associated with a nozzle of a wire feeding welding torch. In one example, the first ends 68 of the first and second head members 56, 60 have edges 57 (four in the illustrated example) defined by substantially perpendicular surfaces 58, 59. These edges 57 assist with scraping an interior of a nozzle of a wire feeding welding torch. In other examples, the surfaces 58, 59 may be arranged at different angles to form different shaped edges 57.

Referring to Figs. 1-3, the apparatus 20 further includes a tip removal tool 92 for performing a tip removal function associated with a tip of a wire feeding welding torch. Different tips based on different sizes of wire. In one example, the tip removal tool 92 is provided by each of the first and second head members 56, 60 defining a recess 96 therein complementarily positioned to cooperate and perform the tip removal function. In this example, each recess 96 is semi-circular and includes a plurality of teeth or projections 100 on an interior surface thereof to provide friction to a tip, thereby inhibiting movement of the tip relative to the apparatus 20 when performing the tip removal function. In the illustrated example, the recesses 96 are defined in the first and second head members 56, 60 between the head pivot 64 and the first ends 68 of the first and second head members 56, 60. Alternatively, the recesses 96 may be located at different positions on the apparatus 20. In other examples, the recesses 96 may have different shapes including, but not limited to, any polygonal perimetered shape, any arcuately perimetered shaped, or a combination of polygonal and arcuately perimetered shape.

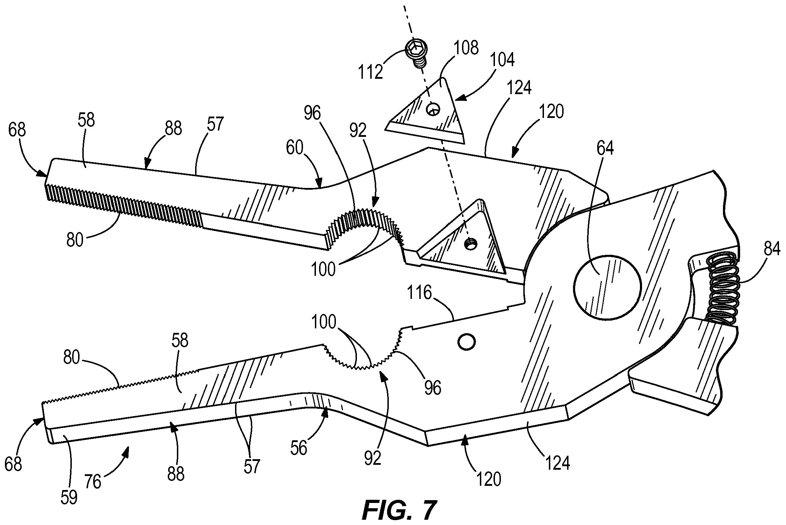

With continued reference to Figs. 1-3 and additional reference to Fig. 7, the apparatus 20 additionally includes a wire cutting tool 104 for performing a wire cutting function. In one example, the wire cutting tool 104 includes a blade or other sharp object 108, a coupling member 112 for removably coupling the blade 108 to the second head member 60, and an engagement surface 116 positioned on the first head member 56 opposite the blade 108. A wire may be placed between the blade 108 and the enagement surface 116 and cut when the blade 108 and the enagement surface 116 come together or engage. In another example, the blade 108 may be removably coupled to the first head member 56 by the coupling member 112 and the engagement surface 116 may be positioned on the second head member 60 opposite the blade 108. It should be understood that the blade 108 may be any type of object having an edge sufficiently sharp to cut a wire as desired and all of such possibilities are intended to be within the spirit and scope of the present disclosure. It should also be understood that the coupling member 112 may be any type of coupling member capable of removably coupling the blade 108 to one of the first or second head members 56, 60 and all of such possibilities are intended to be within the spirit and scope of the present disclosure. For example, the coupling member 112 may be a fastener (e.g., threaded or press-fit), a rivet, a snap-fit or detent device, or any other type of device capable of removably coupling the blade 108 to the one of the first and second head members 56, 60. In further examples, the wire cutting tool 104 may have a sharp edge or object unitarily formed with one or more of the head members 56, 60 for cutting a wire. In such examples, the wire cutting tool 104 would not include a removable or replaceable portion.

Referring again to Figs. 1-3, the apparatus 20 also includes a hammer 120 for performing a hammering function associated with welding. The hammer 120 may be any size, shape or configuration to perform hammering functions associated with welding. In the illustrated example, the hammer 120 is comprised of a flat surface 124 on an exterior of each of the first head member 56 and the second head member 60 such that a user may utilize either flat surface 124 as a hammer. In other examples, the apparatus 20 may include only a single flat surface 124 on an exterior of one of the first or second head members 56, 60.

With continued reference to Figs. 1-3, the apparatus 20 also includes a nozzle removing tool 128 for performing a nozzle removal function associated with a nozzle of a wire feeding welding torch. In one example, the nozzle removing tool 128 is provided by each of the first and second head members 56, 60 defining a recess 132 therein complementarily positioned to cooperate and perform the nozzle removal function. In this example, each recess 132 is semi-circular and includes a plurality of teeth or projections 136 on an interior surface thereof to provide friction to a nozzle, thereby inhibiting movement of the nozzle relative to the apparatus 20 when performing the nozzle removal function. In the illustrated example, the recesses 132 are defined in the first and second head members 56, 60 between the head pivot 64 and the first and second handles 24, 28. Alternatively, the recesses 132 may be located at different positions on the apparatus 20. In other examples, the recesses 132 may have different shapes including, but not limited to, any polygonal perimetered shape, any arcuately perimetered shaped, or a combination of polygonal and arcuately perimetered shape.

With reference to Figs. 1, 2 and 4, the apparatus 20 further includes a knife 140 for performing a cutting function. The knife 140 may be any size and shape, and include a cutting edge 144 sufficiently sharp to perform desired cutting functions associated with welding. In the illustrated example, the knife 140 is rotatably coupled to the first handle 24 at the second pivot 48. The knife 140 is rotatable between an inoperative position, in which the knife 140 is positioned within the second cavity 36 of the first handle 24 (see Fig. 1), and an operative position, in which the knife 140 is positioned outside the second cavity 36 (see Fig. 2) of the first handle 24. In other examples, the knife140 may be rotatably coupled to the second handle 28.

With continued reference to Figs. 1, 2 and 4, the apparatus 20 additionally includes a Phillips-type screwdriver 148 for performing a screwing function on screws having a Philips configuration. The Phillips-type screwdriver 148 may be any size, shape or configuration to perform screwing functions associated with welding. In the illustrated example, the Phillips screwdriver 148 is rotatably coupled to the first handle 24 at the second pivot 48. The Phillips screwdriver 148 is rotatable between an inoperative position, in which the Phillips screwdriver 148 is positioned within the second cavity 36 of the first handle 24 (see Fig. 1), and an operative position, in which the Phillips screwdriver 148 is positioned outside the second cavity 36 of the first handle 24 (see Fig. 2). In other examples, the Phillips screwdriver 148 may be rotatably coupled to the second handle 28.

Referring to Figs. 1, 2 and 4, the apparatus 20 also includes a file 152 for performing a file function. The file 152 includes a plurality of projections 156 on one or both sides of the file 152 to provide roughness or abrasiveness to the file 152 in order to perform a filing function. The file 152 may be any size, shape or configuration to perform filing functions associated with welding. In the illustrated example, the file 152 is rotatably coupled to the first handle 24 at the second pivot 48. The file 152 is rotatable between an inoperative position, in which the file 152 is positioned within the second cavity 36 of the first handle 24 (see Fig. 1), and an operative position, in which the file 152 is positioned outside the second cavity 36 of the first handle 24 (see Fig. 2). In other examples, the file 152 may be rotatably coupled to the second handle 28.

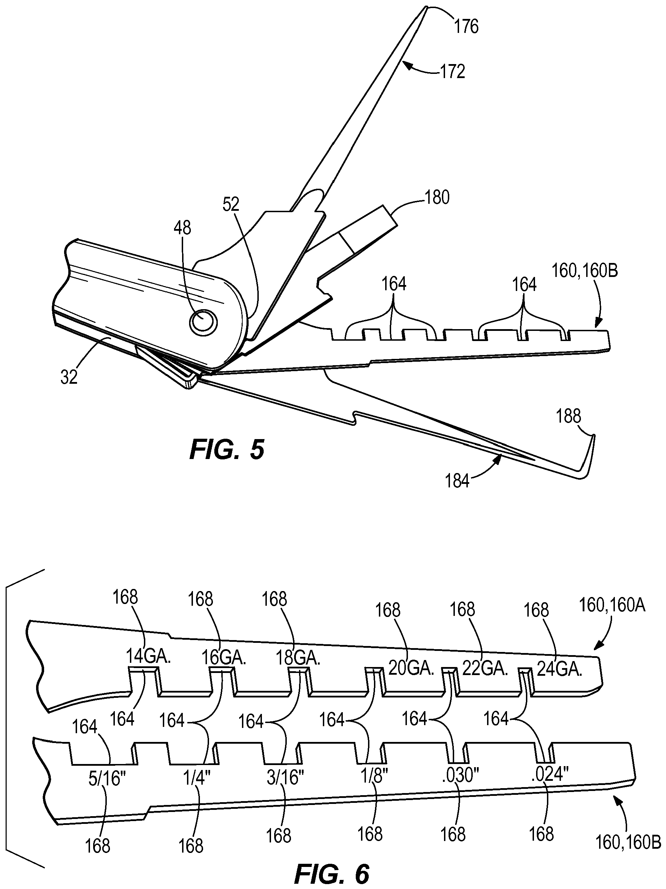

Referring now to Figs. 1, 2 and 4-6, the apparatus 20 further includes a thickness gauge 160 for determine a thickness or gauge of a workpiece. The thickness gauge 160 may have a variety of different configurations and all of which are intended to be within the spirit and scope of the present disclosure. In the illustrated example, the thickness gauge 160 includes a first portion 160A rotatably coupled to the first handle 24 at the second pivot 48 and a second portion 160B rotatably coupled to the second handle 28 at the second pivot 48. Each of the first and second portions 160A, 160B includes a plurality of recesses 164 defined in an edge thereof. The plurality of recesses 164 are all different sizes or widths relative to each other and are used to determine a thickness or gauge of a workpiece. The first and second portions 160A, 160B include a plurality of unique indicium 168 (see Fig. 6) thereon one of which is associated with each of the recesses 164 defined in the first and second portions 160A, 160B. Each unique indicia 168 corresponds to the thickness or gauge of a workpiece that corresponds to the respective recess 164. For example, one recess 164 may correspond to a workpiece having a 3/16^{th} of an inch thickness. The indicia 168 associated with this recess 164 would read, for example "3/16"". The recesses 164 may be any size, correspond to any size or thickness workpiece, and include any indicium 168 that corresponds to the size or thickness of the workpiece, and all of such possibilities are intended to be with in the spirit and scope of the present disclosure. In the illustrated example, the first and second portions 160A, 160B in combination include twelve recesses 164. Alternatively, the first and second portions 160A, 160B may include any number of recesses 164 and be within the spirit and scope of the present disclosure. In the illustrated example, the first portion 160A is rotatably coupled to the first handle 24 at the second pivot 48 and is rotatable between an inoperative position, in which the first portion 160A is positioned within the second cavity 36 of the first handle 24 (see Fig. 1), and an operative position, in which the first portion 160A is positioned outside the second cavity 36 of the first handle 24 (see Fig. 2). Also, in the illustrated example, the second portion 160B is rotatably coupled to the second handle 28 at the second pivot 48 and is rotatable between an inoperative position, in which the second portion 160B is positioned within the second cavity 36 of the second handle 28 (see Fig. 1), and an operative position, in which the second portion 160B is positioned outside the second cavity 36 of the second handle 28 (see Fig. 2).

In some examples, the thickness gauge 160 may only include one portion and the single portion may be rotatably coupled to either the first handle 24 or the second handle 28. In such examples, the single portion of the thickness gauge 160 may include any number of recesses 164. In other examples, the thickness gauge 160 may include more than two portions and such portions may be rotatably coupled to the first and second handles 24, 28 in any manner including, but not limited to, all of the portions rotatably coupled to a single handle and no portions rotatably coupled to the other handle.

With reference to Figs. 1, 2 and 5, the apparatus 20 additionally includes a scratching tool 172 for performing a scratching function. The scratching tool 172 may be any size, shape or configuration and include a sufficiently sharp or steep point 176 to perform scratching functions associated with welding. In the illustrated example, the scratching tool 172 is rotatably coupled to the second handle 28 at the second pivot 48. The point 176 extends transverse to the remainder of the scratching tool 172. In the illustrated example, the point 176 extends generally perpendicular to the remainder of the scratching tool 172. The scratching tool 172 is rotatable between an inoperative position, in which the scratching tool 172 is positioned within the second cavity 36 of the second handle 28 (see Fig. 1), and an operative position, in which the scratching tool 172 is positioned outside the second cavity 36 of the second handle 28 (see Fig. 2). In other examples, the scratching tool 172 may be rotatably coupled to the first handle 24.

With continued reference to Figs. 1, 2 and 5, the apparatus 20 also includes a standard or flathead screwdriver 180 for performing a screwing function for screws having a standard or flathead configuration. The flathead screwdriver 180 may be any size, shape or configuration to perform screwing functions associated with welding. In the illustrated example, the flathead screwdriver 180 is rotatably coupled to the second handle 28 at the second pivot 48. The flathead screwdriver 180 is rotatable between an inoperative position, in which the flathead screwdriver 180 is positioned within the second cavity 36 of the second handle 28 (see Fig. 1), and an operative position, in which the flathead screwdriver is positioned outside the second cavity 36 of the second handle 28 (see Fig. 2). In other examples, the flathead screwdriver 180 may be rotatably coupled to the first handle 24.

Referring to Figs. 1, 2, and 5, the apparatus 20 additionally includes a pick 184 for performing a picking function. The pick 184 may be any size, shape or configuration and include a sufficiently sharp or steep point 188 to perform picking functions associated with welding. In the illustrated example, the pick 184 is rotatably coupled to the second handle 28 at the second pivot 48. The pick 184 is rotatable between an inoperative position, in which the pick 184 is positioned within the second cavity 36 of the second handle 28 (see Fig. 1), and an operative position, in which the pick 184 is positioned outside the second cavity 36 of the second handle 28 (see Fig. 2). In other examples, the pick 184 may be rotatably coupled to the first handle 24.

With respect to Fig. 1, the apparatus 20 is shown in an inoperative or closed condition. In this example, the plurality of tools are positioned in respective second cavities 36 and the first and second head members 56, 60 are at least partially positioned in respective first cavities 32. A user may grasp the first and second handles 24, 28, pull the handles 24, 28 apart and rotate the handles 24, 28 about first pivots 40. Once the handles 24, 28 are rotated to a condition shown in Fig. 2, the apparatus 20 is in an opened or operative condition.

It should be understood that the illustrated arrangement of the plurality of tools on the multifunctional apparatus 20 is only one example of many different possibilities for arranging the plurality of tools on the apparatus 20. The plurality of tools may be arranged on the multifunctional apparatus 20 in any configuration in any combination including all of the plurality of tools on the first handle 24 and no tools on the second handle 28, all the plurality of tools on the second handle 28 and no tools on the first handle 24, or any permutation between those extremes.

It should also be understood that the multifunctional apparatus 20 may include more or fewer tools to perform more or fewer welding functions, and all of such possibilities are intended to be within the spirit and scope of the present disclosure.

It should be understood that the use of any orientation or directional terms herein such as, for example, "top", "bottom", "front", "rear", "back", "left", "right", "side", etc., is not intended to imply only a single orientation of the item with which it is associated or to limit the present disclosure in any manner. The use of such orientation or directional terms is intended to assist with the understanding of principles disclosed herein and to correspond to the exemplary orientation illustrated in the drawings. For example, the multifunctional welding apparatus may be utilized in any orientation and use of such terms is intended to correspond to the exemplary orientation of the multifunctional welding apparatus illustrated in the drawings. The use of these terms in association with the multifunctional welding apparatus is not intended to limit the multifunctional welding apparatus to a single orientation or to limit the multifunctional welding apparatus in any manner.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, inventive subject matter lies in less than all features of a single disclosed embodiment.

While various embodiments of the disclosure have been described, it will be apparent to those of ordinary skill in the art that other embodiments and implementations are possible within the scope of the attached claims.

## Claims

1. A multifunctional welding apparatus (20) comprising:
a first handle (24);
a first head member (56) moveably coupled to the first handle (24);
a second handle (28);
a second head member (60) movably coupled to the second handle (28), wherein the first head member (56) and the second head member (60) are rotatably coupled to each other;
a first tool unitarily formed with at least one of the first head member (56) and the second head member (60), wherein the first tool is a pliers (76),
and
a plurality of tools moveably coupled to at least one of the first handle (24) and the second handle (28), wherein the plurality of tools includes at least one of a thickness gauge (160), a scratching tool (172), and a picking tool (184),
**characterized by**
further including a biasing member (84) between the first and second head members (56, 60), and
wherein not only a pliers (76) is formed with at least one of the first and second head members (56, 60), but also a nozzle removing tool (128), a tip removing tool (92), a wire cutting tool (104), a hammer (120) and a cleaning tool (88).

2. The multifunctional welding apparatus of claim 1, wherein the first head member (56) is rotatably coupled to the first handle (24) and the second head member (60) is rotatably coupled to the second handle (28).

3. The multifunctional welding apparatus of claim 1 or 2, wherein the plurality of tools moveably coupled to at least one of the first handle (24) and the second handle (28) include two or more of a thickness gauge (160), a scratching tool (172), and a picking tool (184).

4. The multifunctional welding apparatus of claim 1 or 2, wherein the plurality of tools moveably coupled to at least one of the first handle (24) and the second handle (28) include all of a thickness gauge (160), a scratching tool (172), and a picking tool (184).

5. The multifunctional welding apparatus of one of the preceding claims,
wherein the plurality of tools moveably coupled to at least one of the first handle (24) and the second handle (28) also includes a file (152), a phillips-type screwdriver (148), a knife (140), and a flathead-type screwdriver (180).

6. The multifunctional welding apparatus of claim 5, wherein the thickness gauge includes a first portion rotatably coupled to the first handle (24) and a second portion rotatably coupled to the second handle (28), and wherein the knife, the phillips-type screwdriver, and the file are rotatably coupled to the first handle (24), and
the scratching tool (172), the picking tool (184), and the flathead-type screwdriver (180) are rotatably coupled to the second handle (28).

7. A method of operating a multifunctional welding apparatus (20), the method comprising:
moving a first handle (24) of the multifunctional welding apparatus (20) relative to a second handle (28) of the multifunctional welding apparatus;
removing a first head member (56) from a first cavity (36) of the first handle (24) upon moving the first handle (24) relative to the second handle (28);
removing a second head member (60) from a first cavity (32) of the second handle (28) upon moving the first handle (24) relative to the second handle (28);
providing at least one tool unitarily formed with at least one of the first and second head members (56, 60);
providing a plurality of tools coupled to at least one of the first and second handles (24, 28), wherein the plurality of tools includes at least one of a thickness gauge (160), a scratching tool (172), and a picking tool (184);
and
moving at least one of the plurality of tools relative to the at least one of the first and second handles (24, 28),
**characterized by**
further including a biasing member (84) between the first and second head member (56, 60), and
wherein the tool provided with at least one of the first and second head members (56, 60) includes a pliers (76), a nozzle removing tool (128), a tip removing tool (92), a wire cutting tool (104), a hammer (120) and a cleaning tool (88).

8. The method of claim 7, wherein moving the first handle (24) relative to the second handle (28) further comprises rotating the first handle (24) relative to the second handle (28).

9. The method of claim 7 or 8, wherein moving at least one of the plurality of tools relative to the at least one of the first and second handles (24, 28) further comprises rotating the at least one of the plurality of tools relative to the at least one of the first and second handles (24, 28).

10. The method of one of claims 7 to 9, wherein the plurality of tools coupled to at least one of the first and second handles (24, 28) includes a thickness gauge (160), a scratching tool (172), and a picking tool (184).

## Patentansprüche

1. Multifunktionelle Schweißvorrichtung (20), umfassend:
einen ersten Griff (24),
ein erstes Kopfelement (56), das bewegbar mit dem ersten Griff (24) gekoppelt ist,
einen zweiten Griff (28),
ein zweites Kopfelement (60), das bewegbar mit dem zweiten Griff (28) gekoppelt ist,
wobei das erste Kopfelement (56) und das zweite Kopfelement (60) drehbar miteinander gekoppelt sind,
ein erstes Werkzeug, das einstückig mit dem ersten Kopfelement (56) und/oder dem zweiten Kopfelement (60) ausgebildet ist, wobei es sich bei dem ersten Werkzeug um eine Zange (76) handelt, und
eine Vielzahl von Werkzeugen, die bewegbar mit dem ersten Griff (24) und/oder dem zweiten Griff (28) gekoppelt sind, wobei die Vielzahl von Werkzeugen eine Dickenlehre (160), ein Kratzwerkzeug (172) und/oder ein Pick-Werkzeug (184) umfasst,
**dadurch gekennzeichnet, dass**
die Vorrichtung ferner ein Vorspannelement (84) zwischen dem ersten und dem zweiten Kopfelement (56, 60) umfasst und
wobei mit dem ersten und/oder dem zweiten Kopfelement (56, 60) nicht nur eine Zange (76), sondern auch ein Düsenabziehwerkzeug (128), ein Spitzenabziehwerkzeug (92), ein Drahtschneidewerkzeug (104), ein Hammer (120) und ein Reinigungswerkzeug (88) ausgebildet sind.

2. Multifunktionelle Schweißvorrichtung nach Anspruch 1, wobei das erste Kopfelement (56) drehbar mit dem ersten Griff (24) gekoppelt ist und das zweite Kopfelement (60) drehbar mit dem zweiten Griff (28) gekoppelt ist.

3. Multifunktionelle Schweißvorrichtung nach Anspruch 1 oder 2, wobei die Vielzahl von Werkzeugen, die bewegbar mit dem ersten Griff (24) und/oder dem zweiten Griff (28) gekoppelt sind, zwei oder mehrere einer Dickenlehre (160), eines Kratzwerkzeugs (172) und eines Pick-Werkzeugs (184) umfasst.

4. Multifunktionelle Schweißvorrichtung nach Anspruch 1 oder 2, wobei die Vielzahl von Werkzeugen, die beweglich mit dem ersten Griff (24) und/oder dem zweiten Griff (28) gekoppelt sind, alle einer Dickenlehre (160), eines Kratzwerkzeugs (172) und eines Pick-Werkzeugs (184) umfasst.

5. Multifunktionelle Schweißvorrichtung nach einem der vorhergehenden Ansprüche, wobei die Vielzahl von Werkzeugen, die bewegbar mit dem ersten Griff (24) und/oder dem zweiten Griff (28) gekoppelt sind, außerdem eine Feile (152), einen Kreuzschlitzschraubendreher (148), ein Messer (140) und einen Senkkopfschraubendreher (180) umfasst.

6. Multifunktionelle Schweißvorrichtung nach Anspruch 5, wobei die Dickenlehre einen ersten Abschnitt, der drehbar mit dem ersten Griff (24) gekoppelt ist, und einen zweiten Abschnitt, der drehbar mit dem zweiten Griff (28) gekoppelt ist, umfasst und wobei das Messer, der Kreuzschlitzschraubendreher und die Feile drehbar mit dem ersten Griff (24) gekoppelt sind und das Kratzwerkzeug (172), das Pick-Werkzeug (184) und der Senkkopfschraubendreher (180) drehbar mit dem zweiten Griff (28) gekoppelt sind.

7. Verfahren zum Bedienen einer multifunktionellen Schweißvorrichtung (20), wobei das Verfahren Folgendes umfasst:
Bewegen eines ersten Griffs (24) der multifunktionellen Schweißvorrichtung (20) relativ zu einem zweiten Griff (28) der multifunktionellen Schweißvorrichtung,
Entnehmen eines ersten Kopfelements (56) aus einer ersten Aushöhlung (36) des ersten Griffs (24) beim Bewegen des ersten Griffs (24) relativ zu dem zweiten Griff (28),
Entnehmen eines zweiten Kopfelements (60) aus einer ersten Aushöhlung (32) des zweiten Griffs (28) beim Bewegen des ersten Griffs (24) relativ zu dem zweiten Griff (28),
Bereitstellen wenigstens eines Werkzeugs, das einstückig mit dem ersten und/oder dem zweiten Kopfelement (56, 60) ausgebildet ist,
Bereitstellen einer Vielzahl von Werkzeugen, die mit dem ersten und/oder dem zweiten Griff (24, 28) gekoppelt sind, wobei die Vielzahl von Werkzeugen eine Dickenlehre (160), ein Kratzwerkzeug (172) und/oder ein Pick-Werkzeug (184) umfasst,
und
Bewegen wenigstens eines aus der Vielzahl von Werkzeugen relativ zu dem ersten und/oder dem zweiten Griff (24, 28),
**dadurch gekennzeichnet, dass**
das Verfahren ferner ein Vorspannelement (84) zwischen dem ersten und dem zweiten Kopfelement (56, 60) umfasst, und
wobei das Werkzeug, das mit dem ersten und/oder dem zweiten Kopfelement (56, 60) versehen ist, eine Zange (76), ein Düsenabziehwerkzeug (128), ein Spitzenabziehwerkzeug (92), ein Drahtschneidewerkzeug (104), einen Hammer (120) und ein Reinigungswerkzeug (88) umfasst.

8. Verfahren nach Anspruch 7, wobei das Bewegen des ersten Griffs (24) relativ zu dem zweiten Griff (28) ferner das Drehen des ersten Griffs (24) relativ zu dem zweiten Griff (28) umfasst.

9. Verfahren nach Anspruch 7 oder 8, wobei das Bewegen wenigstens eines aus der Vielzahl von Werkzeugen relativ zu dem ersten und/oder dem zweiten Griff (24, 28) ferner das Drehen wenigstens eines aus der Vielzahl von Werkzeugen relativ zu dem ersten und/oder dem zweiten Griff (24, 28) umfasst.

10. Verfahren nach einem der Ansprüche 7 bis 9, wobei die Vielzahl von Werkzeugen, die mit dem ersten und/oder dem zweiten Griff (24, 28) gekoppelt sind, eine Dickenlehre (160), ein Kratzwerkzeug (172) und ein Pick-Werkzeug (184) umfasst.

## Revendications

1. Appareil de soudage multifonctionnel (20), comprenant :
une première poignée (24) ;
un premier élément de tête (56) couplé de façon mobile à la première poignée (24) ;
une seconde poignée (28) ;
un second élément de tête (60) couplé de façon mobile à la seconde poignée (28), dans lequel le premier élément de tête (56) et le second élément de tête (60) sont couplés l'un à l'autre de façon rotative ;
un premier outil formé de façon unitaire avec au moins un du premier élément de tête (56) et du second élément de tête (60), dans lequel le premier outil est une pince (76), et
une pluralité d'outils couplés de façon mobile à au moins une de la première poignée (24) et de la seconde poignée (28), dans lequel la pluralité d'outils inclut au moins une d'une jauge d'épaisseur (160), un outil de grattage (172), et un outil d'arrachage (184),
**caractérisé par**
l'inclusion en outre d'un élément de sollicitation (84) entre les premier et second éléments de tête (56, 60), et
dans lequel non seulement une pince (76) est formée avec au moins un des premier et second éléments de tête (56, 60), mais également un outil d'enlèvement de buse (128), un outil d'enlèvement de bec (92), un outil de coupe de fil (104), un marteau (120) et un outil de nettoyage (88).

2. Appareil de soudage multifonctionnel selon la revendication 1, dans lequel le premier élément de tête (56) est couplé de façon rotative à la première poignée (24) et le second élément de tête (60) est couplé de façon rotative à la seconde poignée (28).

3. Appareil de soudage multifonctionnel selon la revendication 1 ou 2, dans lequel la pluralité d'outils couplés de façon mobile à au moins une de la première poignée (24) et de la seconde poignée (28) incluent deux, ou plus, d'une jauge d'épaisseur (160), d'un outil de grattage (172), et d'un outil d'arrachage (184).

4. Appareil de soudage multifonctionnel selon la revendication 1 ou 2, dans lequel la pluralité d'outils couplés de façon mobile à au moins une de la première poignée (24) et de la seconde poignée (28) incluent la totalité d'une jauge d'épaisseur (160), d'un outil de grattage (172), et d'un outil d'arrachage (184).

5. Appareil de soudage multifonctionnel d'une des revendications précédentes, dans lequel la pluralité d'outils couplés de façon mobile à au moins une de la première poignée (24) et de la seconde poignée (28) inclut également une lime (152), une tournevis de type cruciforme (148), un couteau (140), et un tournevis de type fraisé (180).

6. Appareil de soudage multifonctionnel selon la revendication 5, dans lequel la jauge d'épaisseur inclut une première portion couplée de façon rotative à la première poignée (24) et une seconde portion couplée de façon rotative à la seconde poignée (28), et dans lequel le couteau, le tournevis de type cruciforme, et la lime sont couplés de façon rotative à la première poignée (24), et
l'outil de grattage (172), l'outil d'arrachage (184), et le tournevis de type fraisé (180) sont couplés de façon rotative à la seconde poignée (28).

7. Procédé de fonctionnement d'un appareil de soudage multifonctionnel (20), le procédé comprenant :
le déplacement d'une première poignée (24) de l'appareil de soudage multifonctionnel (20) relativement à une seconde poignée (28) de l'appareil de soudage multifonctionnel ;
l'enlèvement d'un premier élément de tête (56) à partir d'une première cavité (36) de la première poignée (24) lors du déplacement de la première poignée (24) relativement à la seconde poignée (28) ;
l'enlèvement d'un second élément de tête (60) à partir d'une première cavité (32) de la seconde poignée (28) lors du déplacement de la première poignée (24) relativement à la seconde poignée (28) ;
la fourniture d'au moins un outil formé de façon unitaire avec au moins un des premier et second éléments de tête (56, 60) ;
la fourniture d'une pluralité d'outils couplés à au moins une des première et seconde poignées (24, 28), dans lequel la pluralité d'outils inclut au moins un d'une jauge d'épaisseur (160), d'un outil de grattage (172), et d'un outil d'arrachage (184) ; et
le déplacement d'au moins un de la pluralité d'outils relativement à l'au moins une des première et seconde poignées (24, 28),
**caractérisé par**
l'inclusion en outre d'un élément de sollicitation (84) entre les premier et second éléments de tête (56, 60), et
dans lequel l'outil pourvu d'au moins un des premier et second éléments de tête (56, 60) inclut une pince (76), un outil d'enlèvement de buse (128), un outil d'enlèvement de bec (92), un outil de coupe de fil (104), un marteau (120) et un outil de nettoyage (88).

8. Procédé selon la revendication 7, dans lequel le déplacement de la première poignée (24) relativement à la seconde poignée (28) comprend en outre la rotation de la première poignée (24) relativement à la seconde poignée (28).

9. Procédé selon la revendication 7 ou 8, dans lequel le déplacement d'au moins un de la pluralité d'outils relativement à l'au moins une des première et seconde poignées (24, 28) comprend en outre la rotation de l'au moins un de la pluralité d'outils relativement à l'au moins une des première et seconde poignées (24, 28) .

10. Procédé selon l'une des revendications 7 à 9, dans lequel la pluralité d'outils couplés à au moins une des première et seconde poignées (24, 28) inclut une jauge d'épaisseur (160), un outil de grattage (172), et un outil d'arrachage (184).
